# EUROPEAN PATENT APPLICATION

(11) **EP 0 801 089 A1**
(43) Date of publication of application: **15.10.1997**
(21) Application number: 96302603.4
(22) Date of filing: 12.04.1996
(51) Int. Cl.: C08G 64/30, C08G 64/42, C08G 64/14

(54) **Preparation of branched polycarbonates**

(71) Applicant: THE COUNCIL OF SCIENTIFIC & INDUSTRIAL RESEARCH, New Delhi - 110001 (IN)
(72) Inventor: Sivaram, Swaminathan, Maharashtra (IN); Hait, Sukhendu Bikash, Maharashtra (IN)
(74) Representative: Marshall, Monica Anne

(57) **Abstract**

The invention provides process for the preparation of a branched poly(arylcarbonate) suitable for use in blow molding, which process comprises subjecting a linear (arylcarbonate) crystallized oligomer derived from a dihydroxy diaryl compound and a diarylcarbonate to solid state polycondensation by heating the oligomer at a temperature, which is higher than its glass transition temperature but below its melting point, in the presence of a multifunctional phenol and, optionally, a catalyst, under an inert atmosphere.

## Description

This invention relates to a process for the preparation of branched poly(arylcarbonate)s. More particularly the present invention provides a process for the preparation of branched poly(arylcarbonate)s by solid state polycondensation of a preformed oligomer in presence of a branching agent and catalyst.

Polycarbonate resins, suitable for blow molding applications such as the production of hollow articles of large volume and large panels, are required to have high melt strength, high shear sensitivity and a complex viscosity ratio. In order to achieve such properties polycarbonates with a critical degree of branching are required.

It is known in the prior art that branched polycarbonates, for example, bisphenol-A polycarbonate, which exhibit high melt strength properties, can be prepared either by a) interfacial polycondensation, or by b) melt phase carbonate interchange using small amounts of polyhydric phenol as branching agent.

The use of polyhydric phenols having three or more hydroxy groups per molecule, for example, 1,1,1-tris-(4-hydroxyphenyl)ethane, 1,3,5-tris-(4-hydroxyphenyl)benzene, 1,4-bis-{di-(4-hydroxyphenyl)phenylmethyl}benzene and the like, as branching agents for high melt strength blow moldable polycarbonate resins prepared by interfacial polycondensation has been described in US-A-3,799,953.

Other methods known for the preparation of branched polycarbonates by interfacial polycondensation include the use of cyanuric chloride as branching agent (US-A-3,541,049); branched dihydric phenols as branching agents (US-A-4,469,861); and 3,3-bis-(4-hydroxyphenyl)-oxyindoles as branching agents (US-A-4,185,009).

The main drawbacks of the above processes are that such interfacial processes involve the use of toxic and hazardous phosgene. In addition, the processes use a chlorinated hydrocarbon as solvent and require disposal of chloride containing solid wastes. In addition the product poly(arylcarbonate) contains residual sodium and chloride ions which adversely affect the hydrolytic stability of the product.

Methods of preparing branched poly(arylcarbonate)s by melt phase carbonate interchange using 1,1,1-tris(4-hydroxyphenyl)ethane (THPE) been described in US-A-4,888,400 and EP-A-400478.

Triphenyl-trimellitate (EP-A-140341) and triglycicyl isocyanurate (US-A-4,959,422) have also been used as branching agents for the synthesis of branched polycarbonates in the melt phase.

The synthesis of branched bisphenol-A polycarbonate with high shear sensitivity from cyclic oligocarbonates has been described by Boden et al (Makromol. Chem., Macromol, Symp. 42/43 (1991), 167-76.) and in US-A-5,097,008.

Examples of improved branched poly(arylcarbonate)s by incorporation of 3,3-bis-(4-hydroxyphenyl)-oxyindoles as branching agent have been described in US-A-4,185,009.

Linear high molecular weight polycarbonates can be polycondensed in the melt phase with THPE resulting in the production of branched polycarbonates suitable for blow molding applications (US-A-5,021,521). However, this process requires high temperatures (270-300°C) and special equipment.

These prior art processes for the preparation of branched polycarbonates are melt phase processes. Melt phase processes suffer from the disadvantage that at very high conversions (>98%), melt viscosity increases considerably. Handling of high viscosity melts at high temperature is difficult. There is an increased chance of poor mixing and generation of hot spots leading to loss of product quality. In addition, this route requires specially designed equipment such as Helicone mixers operating at temperatures in the range of 270-300°C.

Another process for the preparation of high molecular weight polycarbonates involves polycondensation in the solid state, at substantially lower temperatures, in the range of 180-230°C. This process does not require handling of melt at high temperatures and the equipment needed to perform the reaction is very simple.

Solid state polycondensation processes have been described in US-A-5,266,659, US-A-4,948,871, and WO-A 90/07536). In these processes, a suitable oligomer is subjected to programmed heating above the glass transition temperature of the polymer but below the sticking temperature of the polymer with removal of the volatile by-product. The polycondensation proceeds in the solid state under these conditions. It is not however known to prepare branched polycarbonate by solid state polycondensation.

According to the present invention there is provided a process for the preparation of a branched poly(arylcarbonate) which process comprises subjecting a linear poly(arylcarbonate) oligomer to solid state polycondensation by heating the oligomer at a temperature, which is higher than its glass transition temperature but below its melting point, in the presence of a branching agent and under an inert atmosphere. The linear poly(arylcarbonate) oligomer is suitably a crystallised oligomer derived from a dihydroxydiaryl compound and a diaryl carbonate. The process is suitably carried out in the presence of a catalyst.

The process of the present invention is, preferably, conducted in two stages. In the first stage, a low melt viscosity linear oligomer is synthesized by the melt phase reaction of a bisphenol with diaryl carbonate. The oligomer thus formed is subjected to solid state polycondensation in presence, as branching agent of, preferably 0.1 to 2 wt%, of polyhydroxy compound.

In a preferred embodiment of the invention there is provided a process for the preparation of a branched poly(arylcarbonate) which comprises heating a mixture of a dihydroxydiaryl compound and a diaryl carbonate at 150 to 325°C for 4 to 10 hours in presence of a transesterification catalyst to prepare an oligomer having weight average molecular weight of 2,000-20,000 and having both hydroxyl and carbonate end groups, crystallizing the oligomer by controlled method and effecting solid state polycondensation of the crystallized oligomer in presence of a polyhydric phenol as a branching agent.

The synthesis of the linear oligomer is suitably conducted in the molten state at a temperature in range 150-325°C, the preferred range being 180-300°C. The pressure is suitably in the range of 760 to 0.1 mm of Hg or less during the process and diaryl carbonate is removed from the reaction mixture. Such processes for linear oligomer synthesis are well known (US-A-5,371,170; US-A-5,319,066; US-A-5,276,109; US-A-5,288,838; US-A-5,142,018).

The crystallization of the linear poly(arylcarbonate) oligomer may be effected either by (a) dissolving the oligomer in a solvent and evaporating off the solvent in presence of a suitable catalyst; (b) suspending the oligomer in diluent and refluxing it for up to 10 hrs in presence of a suitable catalyst followed by evaporating off the diluent; or (c) heating the oligomer at a temperature which is higher than the glass transition temperature but below its melting point in the presence of a suitable catalyst. The oligomer prepared preferably has a crystallinity of between 5 to 55% as measured by differential scanning calorimeter.

Aromatic bishydroxy compounds which may be used according to the present invention, include the following compounds:
bis(hydroxyphenyl)alkanes such as bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, bis(4-hydroxyphenyl)-phenyl methane, 2,2-bis(4-hydroxy-1-methylphenyl)propane, 2,2-bis(4-hydroxy-t-butylphenyl)propane, and 2,2-bis(4-hydroxy-3-bromophenyl)propane; bis(hydroxyaryl)cycloalkanes such as 1,1-bis(4-hydroxyphenyl)cyclopentane, and 1,1-bis(4-hydroxyphenyl)cyclohexane; dihydroxyarylethers such as 4,4,-dihydroxyphenylether and 4,4'-dihydroxy-3,3'-dimethylphenylether; dihydroxydiaryl sulfoxides such as 4,4'-dihydroxydiphenylsulfoxide and 4,4'-dihydroxy-3,3'-dimethyldiphenylsulfoxide and dihydroxydiaryl sulfones such as 4,4'-dihydroxydiphenylsulfone and 4,4'-dihydroxy-3,3'-dimethyldiphenylsulfone. Of these compounds 2,2-bis(4-hydroxyphenyl)propane is particularly preferred.

The diaryl carbonate used is a carbonate ester of an aromatic monohydroxy compound. Diaryl carbonates which may be used according to the present invention include the following compounds:
diphenyl carbonate, ditolyl carbonate, bis(chlorophenyl) carbonate, m-cresyl carbonate, dinaphthyl carbonate, bis(diphenyl) carbonate etc. Of these diphenyl carbonate is particularly preferred.

The ratio of diaryl carbonate to dihydroxydiaryl compound varies depending upon the type of the diaryl carbonate and dihydroxydiaryl compound employed. However, in general, the diaryl carbonate is used in an amount of 0.95-2.0 moles, more preferably, from 1.01-1.50 moles per mole of dihydroxydiaryl compound.

The hydroxyl number of the oligomer suitable for use in the process is typically between 3-20, the preferred value being 5-18.

Typically the linear poly(arylcarbonate) oligomer has an inherent viscosity in the range of 0.15 to 0.40 dl/g as measured in chloroform at 30°C.

The method of crystallization of the oligomer is not particularly critical. However, it is preferred that the crystallization is carried out by using a solvent or diluent, or by thermal treatment. Solvents which are suitable for crystallization are aliphatic halogenated hydrocarbon such as chloroform, dichloromethane, chloroethane, dichloroethane (position isomer); ethers such as tetrahydrofuran and dioxane, diluents which are suitable for crystallization are esters such as methyl acetate and ethyl acetate; ketones such as acetone and methyl ethyl ketone and aromatic hydrocarbons such as benzene, toluene and xylene. The solvents/diluents may be used individually or in combination.

The amount of solvent used varies depending upon the type of the oligomer, type of solvent/diluent and the desired crystallinity. However, the solvent is generally used in an amount of 1-100 times, preferably 2-50 times, by weight of the oligomer.

In thermal crystallization, the oligomer is subjected to programmed heating at a temperature which is higher than the glass transition temperature but lower than the melting point of the oligomer. The temperature generally ranges from 140-190°C and more preferably from 150-180°C.

The catalysts used may be catalysts conventionally used in transesterification reactions for example: alkali or alkaline metal salts of bisphenol such as disodium salts of bisphenol-A; dipotassium salts of bisphenol-A; tetraalkylammonium hydroxides such as tetrabutylammonium hydroxide; tetramethylammonium hydroxide; tetraalkylammonium carboxylates such as tetrabutylammonium hydrogen bis-benzoate; tetrabutylammonium hydrogen bis-o-nitrobenzoate; tetrabutylammonium hydrogen-bis-p-nitrobenzoate; tetrabutylammonium hydrogen bis-N,N-dimethylammonium benzoate, tetrabutylammonium hydrogen bis-p-methoxybenzoate and tetramethylammonium hydrogen maleate.

Polyhydric (multifunctional) phenols suitable for use as branching agents according to the present invention include triols or tetrols or higher substituted polyhydric phenols, for example, 1,1,1-tris-(4-hydroxyphenyl)ethane; 1,3,5-tris-(2-hydroxyethyl)cyanuric acid: 4,6-dimethyl-2,4,6-tris-(4-hydroxyphenyl)heptane-2; 2,2-bis-4,4'-(4,4''-dihydroxyphenyl)-cyclohexyl propane; 1,3,5-trihydroxybenzene: 1,2,3-trihydroxybenzene and 1,4-bis-(4',4''-dihydroxytriphenylmethyl)benzene. Such compounds and examples of additional polyhydric phenols which may be used according to the invention and their preparation are described, for example, in US-A-3,799,953.

Other commercially available polyhydric phenols, which may be used according to the present invention include, for example, 2',3',4'-trihydroxyacetophenone; 2,3,4-trihydroxybenzoic acid; 2,3,4-trihydroxybenzophenone; 2,4,4'-trihydroxybenzophenone; 2',4',6'-trihydroxy-3-(4-hydroxyphenyl)propiophenone; pentahydroxyflavone; 3,4,5-trihydroxypyrimidine; 3,4,5-trihydroxyphenylmethyl amine; tetrahydroxy-1,4-quinone hydrate: 2,2',4,4'-tetrahydroxybenzophenone: and 1,2,5,8-tetrahydroxyanthraquinone.

The preferred polyhydroxyphenol for use according to the present invention is 1,1,1-tris(4-hydroxyphenyl)ethane (THPE), which compound is readily available at a low price.

The solid state polycondensation may be carried out by heating the crystallized oligomer along with the branching agent and a suitable catalyst. The reaction temperature and time may vary according to the type (chemical structure, molecular weight etc) of the crystallized oligomer. However, it should be at least above the glass transition temperature and below the melting or sticking point of the oligomer. At this temperature the oligomer should not fuse during the solid state polycondensation. Since the melting point of the crystallized oligomer increases during the course of polycondensation, it is desirable to increase the polycondensation temperature gradually. Generally the temperature should be 10-50°C below the melting point of the oligomer and it should be in the range of 150-250°C and more preferably between 180-220°. The reaction temperature should generally not exceed 220°C. Otherwise excessive gelation will occur.

Typically the oligomer is subjected to solid state polycondensation in presence of 0.1 to 2 wt% of a multifunctional phenol, the quantity of catalyst used is between 10 to 150 ppm, the solid state polycondensation is conducted for a period of 2 to 10 hours and the solid state polycondensation is conducted in a fluidized bed using an inert gas as the fluidizing gas, preferably N₂, He, Ar, CO₂.

During solid state polycondensation, by-product should preferably be removed from the reaction system so as to allow the reaction to progress. For this an inert gas may be passed through the reaction system to carry the by-product out from the system. The inert gases which are generally used are N₂, He, CO₂, Ar etc and the flow rate of the carrier gas varies from 0.1 to 4 l/min. depending upon the type of reactor and the particle size of the oligomer. The rate of polycondensation is very much dependent on the type and the flow rate of the carrier gas.

The present invention also provides a blow molded article formed from a branched poly(arylcarbonate) prepared by the process of the invention.

After polycondensation the amount of branching agent incorporated in the polymer can be determined by degradative hydrolysis of the polymer and by HPLC analysis of the product using an internal standard. Any unreacted branching agent is typically removed by repeated dissolution and precipitation prior to analysis.

The poly(arylcarbonate) produced by the process of this invention may be tested as described below.
1. Inherent viscosity measured at 30°C using an ubbleohde viscometer in chloroform.
2. The hydroxyl number estimated by UV-Visible spectrometry using the method given in Macromolecules, 26, 1186 (1993).
3. The weight% of branching agent incorporated analyzed by HPLC after degradative hydrolysis of the polymer using a ZORBAX SBC₈ RP column and acetonitrile/H₂O solvent using 30% acetonitrile and 70% water followed by 100% acetonitrile and 0% water to 20% acetonitrile and 80% water in a total time of 45 minutes. The detector used is a UV multiwavelength detector (waters 490E) which is set at 280 nm and changed to 264 nm after an elapsed time of 17 minutes.

The invention is further illustrated in the following Examples.

### EXAMPLE 1

Bisphenol-A (200 g, 0.877 mole), diphenyl carbonate (197.1 g, 0.921 mole) and tetrabutylammonium hydrogen-bis-o-nitro-benzoate (1.0317 x 10⁻⁵ mole) were charged into a 2 l stainless steel autoclave reactor under N₂ atmosphere. The reaction temperature was increased from room temperature to 230°C in a period of 20 minutes. At this temperature the reaction was continued for 90 minutes under N₂. Thereafter the reaction temperature was gradually increased to 300°C by reducing the pressure from 760 to 1 mm of Hg within a period of 3 hours. Finally the reaction was carried out at 300°C for 30 minutes under 1 mm of Hg pressure. The resulting polymer was cooled to room temperature, dissolved in chloroform, precipitated with methanol and dried in vacuo. The yield of the polymer was 200 g with an inherent viscosity of 0.17 dl/g in chloroform at 30°C. The polymer had a hydroxyl number of 11.

### EXAMPLE 2

In a 100 ml round bottom flask about 10 g of the oligomer of Example 1 was dissolved in 50 ml chloroform to which a methanolic solution of tetramethylammonium hydrogen maleate (25 ppm) and 0.5 weight% of THPE was added and the mixture stirred for 1 hour. Chloroform was evaporated off and the polymer was dried under vacuum at 60°C for 4 hours. The oligomer was then pulverized and particles passing through standard sieves (35-60 mesh) were used for solid state polycondensation.

The solid state polycondensation was performed using a fluidized bed reactor. The reaction was carried out using 3 g of oligomer which was initially conditioned by gradually heating from room temperature to 180°C over a period of 1 hour and retaining the sample at 180°C for 1 hour while a stream of carrier gas was maintained through out the reaction. Further, reaction was carried out at 220°C for 4 hours under the same conditions.

The polymer (1 g) obtained as above was dissolved in chloroform and precipitated from methanol to remove the unreacted THPE.

The inherent viscosity of the polymer obtained is 0.29 dl/g in chloroform at 30°C. About 0.1 g of the polymer was hydrolyzed with 5 ml 18 weight% aqueous KOH solution. The product obtained was analyzed by HPLC technique using N,N-dimethylaminonaphthalene as an internal standard. The analysis showed that 0.49 weight% THPE was incorporated in the poly(arylcarbonate).

### EXAMPLE 3

In a 100 ml round bottom flask about 10 g of the oligomer obtained as Example 1 was dissolved in 50 ml chloroform to which a methanolic solution of tetramethylammonium hydrogen maleate (25 ppm) and 0.75 weight% of THPE was added and the mixture stirred for 1 hour. Chloroform was evaporated off and the polymer was dried under vacuum at 60°C for 4 hours. The oligomer was then pulverized and particles passing through standard sieves (35-60 mesh) were used for solid state polycondensation.

The solid state polycondensation was performed using a fluidized bed reactor. The reaction was carried out using 3 g of oligomer which was initially conditioned by gradually heating from room temperature to 180°C over a period of 1 hour and retaining the sample at 180°C for 1 hour while a stream of carrier gas was maintained throughout the reaction.

Further, reaction was carried out at 220°C for 4 hours under the same conditions.

The polymer (1 g) obtained as above was dissolved in chloroform and precipitated from methanol to remove the unreacted 1,1,1-tris(4-hydroxyphenyl) ethane (THPE). The inherent viscosity of the polymer obtained is 0.28 dl/g in chloroform at 30°C. About 0.1 g of the polymer was hydrolyzed with 5 ml 18 weight% aqueous KOH solution. The poly(arylcarbonate) obtained was analyzed by HPLC technique using N,N-dimethylaminonaphthalene as an internal standard. The analysis showed that 0.7 weight% THPE was incorporated in the poly(arylcarbonate).

### EXAMPLE 4

In a 100 ml round bottom flask about 10 g of oligomer obtained as in Example 1 was dissolved in 50 ml chloroform to which a methanolic solution of tetramethylammonium hydrogen maleate (25 ppm) and 1.0 weight% of THPE was added and the mixture stirred for 1 hour. Chloroform was evaporated off and the polymer was dried under vacuum at 60°C for 4 hours. The oligomer was then pulverized and particles passing through standard sieves (35-60 mesh) were used for solid state polycondensation.

The solid state polycondensation was performed using a fluidized bed reactor. The reaction was carried out using 3g of oligomer which was initially conditioned by gradually heating from room temperature to 180°C over a period of 1 hour and retaining the sample at 180°C for 1 hour while a stream of carrier gas was maintained throughout the reaction. Further, reaction was carried out at 220°C for 4 hours under the same conditions. The polymer (1 g) obtained was dissolved in chloroform and precipitated from methanol to remove the unreacted THPE.

The inherent viscosity of the polymer obtained is 0.27 dl/g in chloroform at 30°C. About 0.1 g of the polymer was hydrolyzed with 5 ml 18 weight% aqueous KOH solution. The poly(arylcarbonate) obtained was analyzed by HPLC technique using N,N-dimethylaminonaphthalene as an internal standard. The analysis showed that 0.96 weight% THPE was incorporated in the poly(arylcarbonate).

### EXAMPLE 5

In a 100 ml round bottom flask about 10 g of oligomer obtained as in Example 1 was dissolved in 50 ml chloroform to which a methanolic solution of tetramethylammonium hydrogen maleate (25 ppm) and 1.5 weight% of THPE was added and the mixture stirred for 1 hour. Chloroform was evaporated off and the polymer was dried under vacuum at 60°C for 4 hours. The oligomer was then pulverized and particles passing through standard sieves (35-60 mesh) were used for solid state polycondensation.

The solid state polycondensation was performed using a fluidized bed reactor. The reaction was carried out using 3g of oligomer which was initially conditioned by gradually heating from room temperature to 180°C over a period of 1 hour and retaining the sample at 180°C for 1 hour while a stream of carrier gas was maintained throughout the reaction. Further, reaction was carried out at 220°C for 4 hours under the same conditions.

The polymer (1 g) obtained was dissolved in chloroform and precipitated from methanol to remove the unreacted THPE. The inherent viscosity of the polymer obtained is 0.31 dl/g in chloroform at 30°C. About 0.1 g of the polymer was hydrolyzed with 4ml 18 weight% aqueous KOH solution. The poly(arylcarbonate) obtained was analyzed by HPLC technique using N,N-dimethylaminonaphthalene as an internal standard. The analysis showed that 1.3 weight% THPE was incorporated in the poly(arylcarbonate). However, 2.5 % gel formation was observed in this case.

### EXAMPLE 6

Bisphenol-A (200 g, 0.877 mole), diphenyl carbonate (197.1 g, 0.921 mole) and tetrabutylammonium hydrogen-bis-o-nitrobenzoate (1.0317 x 10⁻⁵ mole) were charged into the 2 l stainless steel autoclave under N₂ atmosphere. The reaction temperature was increased from room temperature to 230°C in a period of 20 minutes. At this temperature the reaction was continued for 90 minutes under N₂. Thereafter the reaction temperature was gradually increased to 300°C by reducing the pressure from 760 to 1 mm of Hg within a period of 3 hours. Finally the reaction was carried out at 300°C for 2 hours under 1 mm of Hg pressure. The resulting polymer was cooled to room temperature, dissolved in chloroform, precipitated with methanol and dried in vacuo. The yield of the polymer was 200 g with an inherent viscosity of 0.42 dl/g in chloroform at 30°C. The polymer had a hydroxyl number of 7.

### EXAMPLE 7

In a 100 ml round bottom flask about 10 g of the oligomer was dissolved in 50 ml chloroform to which a methanolic solution of disodium salt of bisphenol-A (25 ppm) and 0.5 weight% THPE was added and the mixture stirred for 1 hour. Chloroform was evaporated off and the polymer was dried under vacuum at 60°C for 4 hours. The oligomer was then pulverized and particles passing through standard sieves (35-60 mesh) were used.

The solid state polycondensation was performed using a fluidized bed reactor. The reaction was carried out using 3g of oligomer which was initially conditioned by gradually heating from room temperature to 180°C over a period of 1 hour and retaining the sample at 180°C for 1 hour while a stream of carrier gas (2 l/min) was maintained throughout the reaction. Further, reaction was carried out at 210°C for 4 hours under the same conditions.

The polymer (1 g) obtained was dissolved in chloroform and precipitated from methanol to remove the unreacted THPE. The inherent viscosity of the polymer thus obtained is 0.58 dl/g in chloroform at 30°C. About 0.1 g of this polymer was degradative hydrolyzed with 5 ml 18 weight% aqueous KOH solution. The product obtained was analyzed by HPLC using N,N-dimethylaminonaphthalene as an internal standard. HPLC shows 0.39 weight% THPE is incorporated and 1.5 % gel formation.

### EXAMPLE 8

In a 100 ml round bottom flask about 10 g of the oligomer obtained as in Example 6 was dissolved in 50 ml chloroform to which methanolic solution of disodium salt of bisphenol-A (25 ppm) and 0.75 weight% THPE was added and the mixture stirred for 1 hour. Chloroform was evaporated off and the polymer was dried under vacuum at 60°C for 4 hours. The oligomer was then pulverized and particles passing through standard sieves (35-60 mesh) were used.

The solid state polycondensation was performed using a fluidized bed reactor. The reaction was carried out using 3 g of oligomer which was initially conditioned by gradually heating from room temperature to 180°C over a period of 1 hour and retaining the sample at 180°C for 1 hour while a stream of carrier gas (2 l/min) was maintained throughout the reaction. Further, reaction was carried out at 210°C for 4 hours under the same conditions.

The polymer (1 g) obtained was dissolved in chloroform and precipitated from methanol to remove the unreacted THPE. The inherent viscosity of the polymer thus obtained is 0.43 dl/g in chloroform at 30°C. About 0.1 g of this polymer was degradative hydrolyzed with 5 mL 18 weight% aqueous KOH solution. The poly(arylcarbonate) obtained was analyzed by HPLC using N,N-dimethylaminonaphthalene as an internal standard. HPLC shows 0.7 weight% THPE is incorporated and 4.5 % gel formation.

## Claims

1. A process for the preparation of a branched poly(arylcarbonate) which process comprises subjecting a linear poly(arylcarbonate) oligomer to solid state polycondensation by heating the oligomer at a temperature, which is higher than its glass transition temperature but below its melting point, in the presence of a branching agent and under an inert atmosphere.

2. A process according to claim 1 wherein the linear poly(arylcarbonate) oligomer has an inherent viscosity in the range of 0.15 to 0.40 dl/g as measured in chloroform at 30°C.

3. A process according to claim 1 or 2, wherein the linear poly(arylcarbonate) oligomer employed has a hydroxyl number of 5 to 18.

4. A process according to any preceding claim wherein the linear poly(arylcarbonate) oligomer is a crystallized oligomer derived from a dihydroxydiaryl compound and a diarylcarbonate.

5. A process according to claim 4, wherein the linear poly(arylcarbonate) oligomer has a crystallinity between 5 to 55%.

6. A process according to claim 4 or 5, wherein the dihydroxydiaryl compound is a bisphenol chosen from bis(hydroxyphenyl) alkanes, preferably bis(4-hydroxyphenyl) methane, 1,1-bis(4-hydroxyphenyl) ethane; 2,2-bis(4-hydroxyphenyl) propane, 2,2-bis(4-hydroxyphenyl) butane, 2,2-bis(4-hydroxyphenyl) octane, bis(4-hydroxyphenyl) phenylmethane, 2,2-bis(4-hydroxy-1-methylphenyl) propane, 2,2-bis(4-hydroxy-t-butylphenyl) propane and 2,2-bis-(4-hydroxy-3-bromophenyl) propane; bis(hydroxyaryl) cycloalkanes, preferably 1,1-bis(4-hydroxyphenyl) cyclopentane, and 1,1-bis(4-hydroxyphenyl)cyclohexane; dihydroxyarylethers, preferably 4,4'-dihydroxyphenyl ether and 4,4'-dihydroxy-3,3'-dimethyldiphenyl ether; dihydroxydiaryl sulfoxides, preferably 4,4'-dihydroxydiphenyl sulfoxide and 4,4'-dihydroxy-3,3'-dimethyldiphenyl sulfoxide; and dihydroxydiaryl sulfones, preferably 4,4'-dihydroxydiphenyl sulfone.

7. A process according to any of claims 4 to 6, wherein the diaryl carbonate is diphenyl carbonate, ditolyl carbonate, bis(chlorophenyl) carbonate, m-cresyl carbonate, dinaphthyl carbonate or bis(diphenyl) carbonate.

8. A process according to any of the preceding claims wherein the branching agent is a multifunctional phenol.

9. A process according to claim 8, wherein the oligomer is subjected to solid state polycondensation in the presence of 0.1 to 2 wt% of a multifunctional phenol.

10. A process according to claim 8 or 9, wherein the multifunctional phenol is chosen from 1,1,1-tris-(4-hydroxyphenyl)ethane; 1,3,5-tris(2-hydroxyethyl)cyanuric acid; 4,6-dimethyl-2,4,6-tris-(4-hydroxyphenyl)heptane-2; 2,2-bis-4,4-(4,4''-dihydroxyphenyl)-cyclohexyl propane; 1,3,5-trihydroxybenzene; 1,2,3-trihydroxybenzene; 1,4-bis-(4',4''-dihydroxytriphenylmethyl)benzene; 2',3',4'-trihydroxyacetophenone; 2,3,4-trihydroxybenzoic acid; 2,3,4-trihydroxybenzophenone; 2,4,4'-trihydroxybenzophenone; 2',4',6'-trihydroxy-3(4-hydroxyphenyl)propiophenone; pentahydroxyflavone; 3,4,5-trihydroxypyrimidine; 3,4,5-trihydroxyphenylmethyl amine; tetrahydroxy-1,4-quinone hydrate; 2,2',4,4'-tetrahydroxybenzophenone; and 1,2,5,8-tetrahydroxyanthraquinone.

11. A process according to any preceding claim carried out in the presence of a catalyst.

12. A process according to claim 11, wherein the catalyst is chosen from an alkali or alkaline metal salt of bisphenol, preferably a disodium salt of bisphenol-A, or dipotassium salt of bisphenol-A; a tetraalkylammonium hydroxide, preferably tetrabutylammonium hydroxide, or tetramethylammonium hydroxy; a tetraalkylammonium carboxylate or bicarboxylate, preferably tetrabutylammonium hydrogen-bis-benzoate, tetrabutylammonium hydrogen-bis-o-nitrobenzoate, tetrabutylammonium hydrogen-bis-p-nitrobenzoate; tetrabutylammonium hydrogen-bis-N,N-dimethylamino-benzoate; tetrabutylammonium hydrogen-bis-p-methoxybenzoate, tetrabutylammonium hydrogen-bis-p-anisicbenzoate or tetramethylammonium hydrogen maleate.

13. A process according to claim 11 or 12, wherein the quantity of catalyst used is between 10 to 150 ppm.

14. A process according to any preceding claim, wherein the solid state polycondensation is conducted by heating at a temperature in the range of 180-220°C with the final temperature exceeding 220°C.

15. A process according to any preceding claim, wherein the solid state polycondensation is conducted for a period of 2 to 10 hours.

16. A process according to any preceding claim, wherein the solid state polycondensation is conducted in a fluidized bed using an inert gas as the fluidizing gas, preferably N₂, He, Ar, CO₂.

17. A process according to any preceding claim, wherein the solid state polycondensation is conducted in the presence of nitrogen, argon, carbon dioxide or helium as fluidizing gas.

18. A blow molded article formed from a branched poly(arylcarbonate) prepared by the process claimed in any one of the preceding claims.
